# FASCICULE DE BREVET EUROPEEN

(11) **EP 0 359 662 B1**
(45) Date de publication et mention de la délivrance du brevet: **01.09.1993**
(21) Numéro de dépôt: 89402500.6
(22) Date de dépôt: 13.09.1989
(51) Int. Cl.: F02K 9/52, F02K 9/60

(54) **Dispositif de prélèvement de gaz chauds dans une chambre de combustion et tête d'injection équipée d'un dispositif de prélèvement**
Heissgaszapfvorrichtung in einer Raketenbrennkammer und Einspritzkopf, versehen mit einer solchen Vorrichtung
Device for tapping hot gas from a combustion chamber, and injection head equipped therewith

(30) Priorité: 14.09.1988 FR 8811999
(43) Date de publication de la demande: 21.03.1990
(73) Titulaire: SOCIETE EUROPEENNE DE PROPULSION, 92150 Suresnes (FR)
(72) Inventeur: Dubedout, Antoine, F-45200 Montargis (FR); Morel, René, F-27120 Pacy-sur-Eure (FR)
(74) Mandataire: Thévenet, Jean-Bruno

(56) Documents cités:
- FR-A- 2 498 946
- FR-A- 2 570 129
- US-A- 2 585 626
- US-A- 2 667 740
- US-A- 2 995 008
- US-A- 3 127 738
- US-A- 3 662 960
- US-A- 4 621 492
- THE JOURNAL OF SPACECRAFT AND ROCKETS, vol. 21, no. 4, juillet/août 1984,pages 346-353, American Institute of Aeronautics and Astronautics, Inc., NewYork, US; M.F. POULIQUEN: "HM60 cryogenic rocket engine for future europeanlaunchers"

## Description

La présente invention concerne un dispositif de prélèvement de gaz chauds dans une chambre de combustion, notamment une chambre de combustion de moteur-fusée à propergols liquides, et une tête d'injection équipée d'un tel dispositif de prélèvement.

Un domaine d'application privilégié de ce type de dispositif se situe dans les chambres de combustion de moteurs-fusées mais le dispositif trouve aussi une application particulière dans les générateurs de gaz pour lesquels deux températures de sortie peuvent être demandées.

De façon connue, il existe essentiellement deux types d'injecteurs placés à l'entrée des chambres de combustion :

Un premier mode d'injection illustré notamment par le document FR-A-2 543 222 consiste à amener séparément chacun des deux ergols nécessaires à la combustion grâce à deux réseaux de canaux d'introduction, les canaux de l'un des réseaux entourant les buses de l'autre réseau.

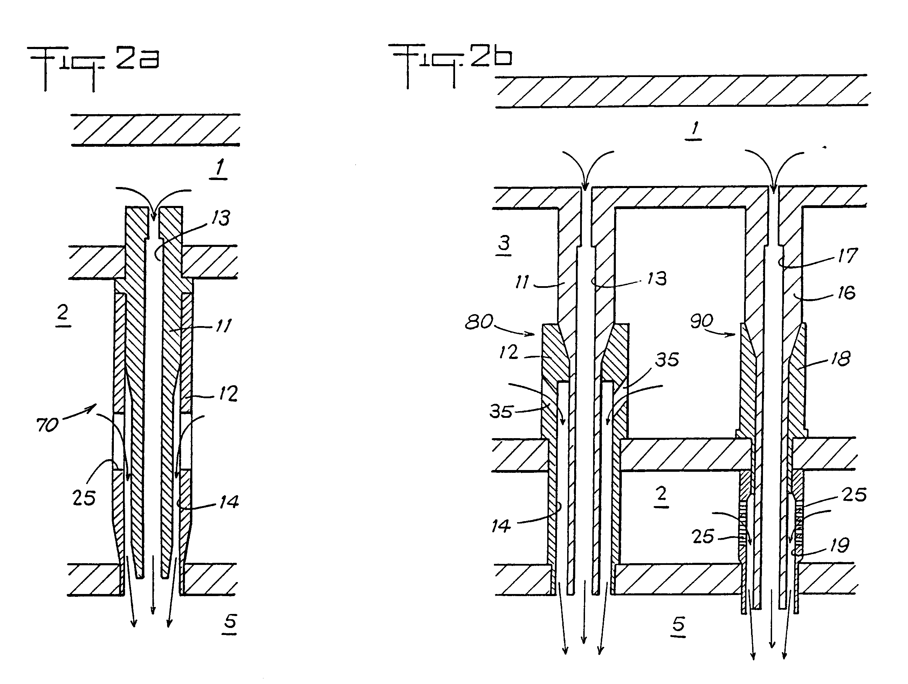

La figure 2a illustre de façon schématique ce mode d'injection pour lequel l'un des ergols est amené, à partir d'une cavité 1 par la veine centrale 13 de l'injecteur tubulaire 70 tandis que le second ergol, stocké dans une seconde cavité 2, est introduit par des orifices latéraux 25 et parcourt l'espace annulaire 14 formé par deux éléments tubulaires coaxiaux 11 et 12, avant de pénétrer dans la chambre de combustion 5. La combustion est ainsi assurée, de façon connue, par la réaction chimique entre les deux ergols dans la chambre de combustion 5.

Un second mode d'injection est utilisé dans le cas de moteurs dits "à flux intégré".

La figure 2b représente schématiquement un exemple de réalisation plus complexe que le premier et qui compte trois cavités distinctes: deux cavités 1, 2 pour chacun des ergols et une cavité 3 pour des gaz chauds. L'un des ergols est injecté à partir de la première cavité 1 simultanément à travers deux éléments tubulaires 11 et 16 de deux injecteurs 80, 90. L'autre ergol est injecté à partir de la seconde cavité 2 au travers d'orifices 25 pratiqués dans un élément tubulaire extérieur 18 coaxial à l'élément tubulaire 16. Le second ergol est ainsi injecté dans la chambre de combustion à travers un espace annulaire 19 défini par les éléments tubulaires coaxiaux 16, 18 et se mélange au premier ergol appliqué par le canal central 17. Pour le cas de moteurs "à flux intégré", une seconde injection à lieu dans la même chambre : il s'agit de l'injection d'un mélange du premier ergol appliqué par le canal central 13 de l'injecteur 80 et de gaz chauds partiellement brûlés générés dans une ou plusieurs préchambres alimentant la cavité 3 par l'un des deux ergols et introduits par des orifices latéraux 35 à travers l'élément tubulaire externe 12 de l'injecteur 80 pour être guidés à travers l'espace annulaire 14 défini par les éléments tubulaires 11, 12 vers la chambre de combustion.

Le document FR-A-2 570 129 montre un exemple de réalisation dans lequel un premier propergol est amené par un tube central directement dans la chambre de combustion, tandis qu'un second propergol est amené simultanément à travers un espace annulaire, les deux propergols étant issus de deux cavités séparées. Selon cet exemple de réalisation, une chambre d'amortissement est en outre ménagée à l'intérieur de l'une des deux premières cavités dans la tête d'injection pour recueillir les gaz de combustion refoulés depuis la chambre de combustion à travers un canal de passage. Cette troisième cavité est prévue pour amortir les vibrations qui se produisent dans les gaz au cours du processus de combustion, à l'intérieur de la chambre de combustion. Par ailleurs, de petites ouvertures sont formées dans la paroi séparant la chambre d'amortissement de la cavité contenant le propergol réducteur afin de permettre l'introduction dans la chambre d'amortissement d'un débit de balayage afin d'éviter la formation de mélanges réactifs dans celle-ci. Les chambres d'amortissement formées dans la tête d'injection ne sont reliées à aucun collecteur de sorte que les produits de combustion qui y pénètrent temporairement sont ensuite obligatoirement rejetés dans la chambre de combustion.

On connait par ailleurs par le document US-A-3 127 738 un système de prélèvement de gaz chauds dans une chambre de combustion, selon lequel toutefois, le prélèvement est effectué sur le divergent et non en fond de chambre au voisinage des injecteurs. De plus, dans ce cas, la zone de prélèvement est constituée d'une zone de forme circulaire peu étendue, ayant même axe que la tuyauterie de prélèvement. Les performances ne sont que médiocres, car au niveau du prélèvement la pression et la température sont plus faibles qu'en fond de chambre au voisinage des injecteurs.

Le document US-A-2 585 626 décrit une chambre de combustion de moteur-fusée dans laquelle les ergols sont injectés par des injecteurs indépendants pour chacun des ergols et disposés latéralement de façon inclinée par rapport à l'axe de la chambre de combustion. Un orifice est ménagé axialement dans le fond de la chambre de combustion pour permettre le prélèvement de gaz chauds et le passage de ceux-ci dans une chambre auxiliaire qui est disposée axialement à l'arrière de la chambre de combustion en présentant une paroi commune avec celle-ci. Les gaz chauds introduits dans la chambre auxiliaire sont utilisés pour l'entraînement d'une turbine d'entraînement des turbopompes d'alimentation en ergols. Les gaz chauds introduits dans la chambre auxiliaire peuvent être refroidis par mélange avec de la vapeur d'eau. L'un des ergols peut également circuler dans la paroi de la chambre auxiliaire à des fins de refroidissement. La chambre auxiliaire, qui est contiguë à la chambre de combustion et communique avec celle-ci directement par un orifice est soumise à des contraintes thermiques élevées malgré les moyens de refroidissement envisagés et la quantité de gaz introduits dans la chambre auxiliaire ne peut ni être ajustée avec précision ni constituer une réserve d'énergie utilisable pour des applications variées.

On connait par ailleurs des dispositifs de prélèvement de gaz chauds dans une chambre de combustion, tels que ceux qui sont mis en oeuvre dans le moteur-fusée du type J2S de la Société américaine Rocketdyne. Ces dispositifs de prélèvement de gaz sont cependant complexes et coûteux et nécessitent un agencement particulier impliquant des technologies spécifiques.

La présente invention vise à remédier aux inconvénients précités et à permettre la réalisation d'un prélèvement de gaz chauds dans une chambre de combustion, notamment de moteur-fusée, de façon simple et efficace, le dispositif de prélèvement pouvant être installé de façon rapide et peu coûteuse.

L'invention vise ainsi à permettre de réaliser avec simplicité un moteur-fusée sans générateur de gaz pouvant fonctionner suivant le cycle dit "tap off" et présentant une masse et un coût réduits tout en bénéficiant d'une fiabilité accrue et en autorisant de grandes excursions de son point de fonctionnement.

L'invention a encore pour but de permettre de fournir de façon simple des gaz chauds à des organes assurant des fonctions propulsives secondaires, à des turbo-pompes d'ergols ou à des "groupes auxiliaires de puissance" qui transforment l'énergie contenue dans ces gaz chauds en énergie électrique, hydraulique ou autre.

L'invention a enfin pour but de permettre la conception d'un générateur de gaz fournissant des gaz à deux niveaux différents de température.

Ces buts sont atteints grâce à un dispositif de prélèvement de gaz chauds dans une chambre de combustion dans laquelle débouchent plusieurs injecteurs fournissant au moins deux ergols provenant de deux cavités différentes et un organe de prélèvement destiné à acheminer des gaz prélevés dans la chambre de combustion vers une troisième cavité, le dispositif comprenant un système de refroidissement à partir de l'un des ergols, caractérisé en ce que les injecteurs sont montés dans une plaque d'injection et comportent chacun au moins un canal d'amenée pour un ergol, en ce qu'il comprend une pluralité d'organes de prélèvement constitués chacun d'au moins un élément tubulaire comportant au voisinage de son extrémité opposée à la chambre de combustion un ajutage de réglage individuel du débit des gaz prélevés et en ce que ledit système de refroidissement à partir de l'un des ergols comprend des moyens de mise en contact direct dudit ergol avec au moins la face externe de la paroi latérale de chaque organe de prélèvement.

Le système de refroidissement de l'organe de prélèvement peut consister en la simple mise en contact de l'ensemble de la face externe de la paroi latérale de l'élément tubulaire avec l'un des ergols froids.

Toutefois, ce système de refroidissement peut avantageusement comprendre des moyens de mise en circulation de l'un des ergols sur une partie de la hauteur de l'organe de prélèvement afin de refroidir aussi bien l'organe de prélèvement que les gaz prélevés.

Selon un mode particulier de réalisation, ledit organe de prélèvement comprend deux éléments tubulaires coaxiaux dont le plus interne comporte au voisinage de son extrémité opposée à la chambre de combustion ledit ajutage de réglage individuel du débit des gaz prélevés et sert de tube de prélèvement proprement dit et le plus externe constitue un tube de refroidissement.

Dans ce cas, l'élément tubulaire externe de l'organe de prélèvement est muni d'ouvertures pour laisser s'écouler l'ergol refroidisseur dans un espace annulaire défini par les deux éléments tubulaires coaxiaux. Lesdites ouvertures servant à créer un flux d'ergol refroidisseur, permettent de régler la température des gaz prélevés.

Selon une caractéristique particulière, la paroi latérale de l'élément tubulaire constituant l'organe de prélèvement est perçée de trous calibrés radiaux permettant de refroidir les gaz chauds circulent dans l'organe de prélèvement d'une valeur prédéterminée par injection, dans le flux de gaz prélevés, d'un débit d'ergol froid avec lequel est en contact la face extérieure de la paroi latérale de l'élément tubulaire.

Avantageusement, les éléments de prélèvement pénètrent d'une certaine longueur dans la chambre de combustion afin notamment de servir de "baffles acoustiques" dans ladite chambre en vue de contrôler des fluctuations de combustion à hautes fréquences.

Il est également possible de réaliser autour de chaque organe de prélèvement un baffle qui entoure l'entrée de l'organe de prélèvement du côté de la chambre de combustion et est pris dans la masse de la plaque d'injection supportant les injecteurs et organes de prélèvement pour limiter le prélèvement de gaz incomplètement brûlés.

L'invention concerne aussi une tête d'injection pour chambre de combustion, comprenant des première et deuxième cavités contenant des premier et deuxième ergols, plusieurs injecteurs comportant chacun au moins un canal d'amenée pour l'un des ergols lesdits injecteurs débouchant dans ladite chambre de combustion, caractérisée en ce qu'elle comprend en outre au moins un dispositif de prélèvement du type défini ci-dessus, pour acheminer vers une troisième cavité des gaz prélevés dans la chambre de combustion et la cavité vers laquelle sont amenés les gaz chauds prélevés est munie à sa sortie d'un élément de réglage du débit des gaz, sous forme d'ajutage ou de col sonique.

Selon un mode particulier de réalisation, des orifices de passage de l'ergol refroidisseur sont ménagés dans la paroi séparant la cavité le contenant et la cavité dans laquelle sont acheminés les gaz prélevés.

D'autres caractéristiques, avantages et détails apparaîtront plus clairement à l'aide de la description explicative qui va suivre, faite en référence aux dessins annexés donnés uniquement à titre d'exemple et dans lesquels :
- la figure 1 est en vue en coupe d'une partie de tête d'injection équipée d'un dispositif de prélèvement conforme à l'invention,
- la figure 1A est un détail de la figure 1 montrant une variante de réalisation de l'extrémité de prélèvement d'un organe de prélèvement,
- Les figures 2a et 2b représentent de façon schématique en coupe axiale des injecteurs de l'art antérieur, la figure 2b représentant un type particulier d'injecteurs équipant des moteurs dits "à flux intégré",
- les figures 3 à 7 sont des vues analogues à la figure 1 montrant d'autres modes de réalisation du dispositif de prélèvement selon l'invention,
- les figures 8 à 10 sont des vues en coupe du seul dispositif de prélèvement selon encore d'autres modes de réalisation de l'invention,
- la figure 11 est une vue schématique en élévation du tube externe d'un dispositif de prélèvement selon un exemple de réalisation particulier, et
- les figures 12 à 14 montrent des vues frontales d'une tête d'injection équipée de dispositifs de prélèvement selon l'invention, avec trois agencements différents des dispositifs de prélèvement.

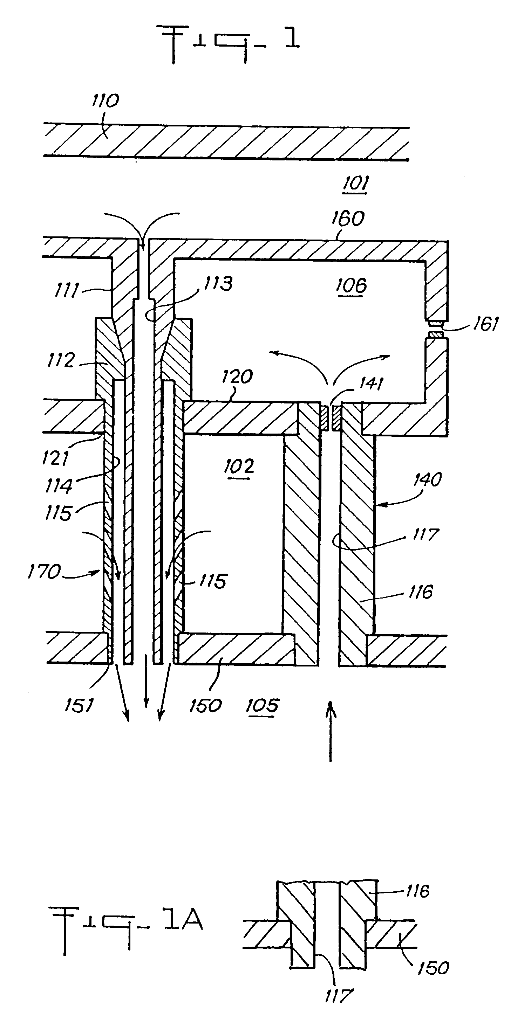

En se référant à la figure 1, il va être décrit un premier mode de réalisation d'un ensemble de prélèvement de gaz chauds conforme à l'invention.

L'ensemble comprend, d'une façon connue, une chambre 101 d'injection d'un premier ergol, une chambre 102 d'injection d'un second ergol, une série d'injecteurs 170 comprenant chacun deux tubes coaxiaux 111, 112 débouchant dans une même chambre de combustion 105 pour y amener les deux ergols séparément.

Comme représenté sur la figure 1, un injecteur 170 comprend un premier tube central 111 définissant un conduit central qui prend naissance dans la chambre 101 contenant le premier ergol, qui est de préférence l'ergol oxydant, et débouche directement dans la chambre de combustion 105. Un second tube externe 112 est monté de façon coaxiale au premier tube 111 et débouche comme celui-ci dans la chambre de combustion 105 à travers une ouverture 151 de la paroi 150 de la chambre de combustion.

Un espace annulaire 114 est ménagé entre les deux tubes coaxiaux 111 et 112. Le tube coaxial externe 112 est muni d'une série d'ouvertures 115, par exemple de forme hélicoïdale, qui permettent le passage du second ergol, qui est de préférence l'ergol réducteur, de la chambre 102 à l'espace annulaire 114.

Le conduit central 113 de l'injecteur 170 prend naissance au niveau de la paroi 160 qui sépare la chambre 101 de stockage du premier ergol d'une chambre 106 de prélèvement des gaz chauds. L'injecteur 170 traverse par une ouverture 121 une paroi 120 séparant la chambre 106 de prélèvement des gaz chauds de la chambre 102 de stockage du second ergol.

La caractéristique essentielle de l'invention réside dans la présence d'au moins un dispositif de prélèvement 140 disposé au voisinage d'un injecteur 170 et chargé de prélever les gaz chauds formés dans la chambre de combustion 105, et de les amener vers la chambre 106 dite de prélèvement afin de fournir en sortie des gaz chauds à une température en principe différente de celle des gaz de la chambre de combustion 105.

Selon un premier mode de réalisation, le dispositif de prélèvement 140 comporte un simple tube de prélèvement 116 qui prend naissance dans la chambre de combustion 105 en pénétrant légèrement dans la chambre de combustion 105 (Fig 1A) ou en affleurant simplement la plaque d'injection constituant la paroi 150 de fond de chambre (Fig 1). Le tube de prélèvement 116 qui définit un canal 117 débouche par son extrémité opposée à la chambre de combustion 105 dans une cavité 106 de prélèvement de gaz chauds. Un trou calibré 141 situé à la sortie du tube de prélèvement 116, permet de régler le débit de gaz chauds.

Dans ce premier mode de réalisation, le tube de prélèvement 116 est refroidi par l'ergol présent dans la cavité 102 traversée par le tube de prélèvement 116.

Le tube de prélèvement 116 peut être constitué en un matériau capable de supporter de hautes températures, tel qu'un matériau composite thermo-structural par exemple. La porosité de ce composite n'est pas gênante dans la mesure où l'ergol présent dans la chambre 102 est compatible avec la composition chimique des gaz chauds. La pression de cet ergol est d'ailleurs nécessairement supérieure à celle des gaz chauds.

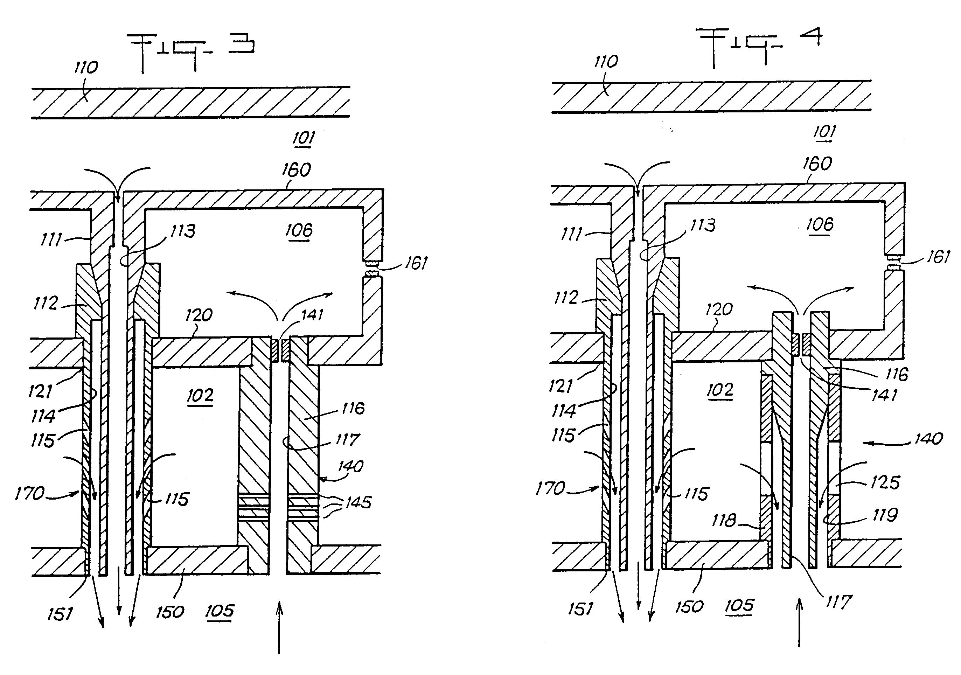

La figure 3 montre un mode de réalisation semblable à celui de la figure 1, mais dans lequel des trous calibrés radiaux 145 sont usinés dans la paroi du tube de prélèvement 116. Ces trous 145 ont pour but de refroidir les gaz chauds d'une valeur prédéterminée par injection d'ergol froid.

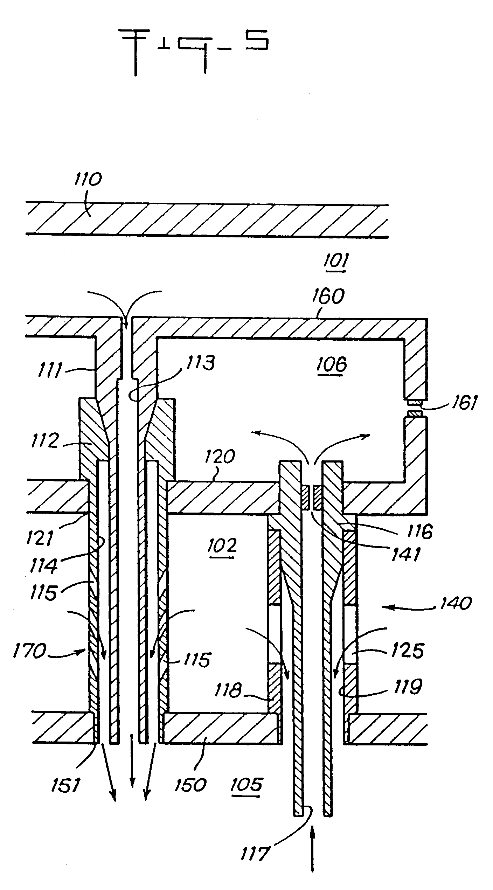

Selon un autre mode de réalisation, représenté sur la figure 4, ledit dispositif de prélèvement 140 comporte deux tubes coaxiaux 116 et 118 dont une extrémité affleure la plaque d'injection constituant une partie de la paroi 150 de la chambre de combustion 105. Le tube externe 118 est percé de trous 125 destinés à permettre l'admission de l'ergol contenu dans la cavité 102 dans un espace annulaire 119 défini entre les deux tubes coaxiaux 116, 118 afin de créer un débit d'ergol qui s'écoule sur au moins une partie de la hauteur du dispositif de prélèvement 140 constituant un élément d'injection spécifique. Le débit d'ergol circulant dans l'espace annulaire 119 est plus froid que les gaz de la chambre de combustion et va se mélanger à ces derniers dans la zone de prélèvement. La circulation de l'ergol de refroidissement entre le tube interne 116 constituant le tube de prélèvement proprement dit et le tube externe 118 constituant le tube de refroidissement, se fait en phase liquide ou en phase supercritique s'il s'agit d'hydrogène.

Comme représenté sur les figures 5, 6 et 8 et 9, le dispositif de prélèvement 140 plutôt que d'affleurer, peut pénétrer d'une certaine longueur à travers l'ouverture 152 de la paroi 150 de la chambre de combustion 105 à l'intérieur même de cette chambre de combustion 105. Cette projection du ou des dispositifs de prélèvement 140 dans la chambre de combustion 105 permet de créer des baffles permettant d'adapter les fréquences acoustiques de la chambre 105 et de réduire les risques de fluctuation de combustion à haute fréquence. Le dépassement des dispositifs de prélèvement 140 à l'intérieur de la chambre 105 permet ainsi de réduire les recirculations ou les champs de vitesse préjudiciables à la bonne combustion et de choisir convenablement les points de prélèvement afin de ne pas réduire le rendement de la combustion. On notera que le dépassement des dispositifs de prélèvement 140 à l'intérieur de la chambre de combustion 105 ne présente pas de risque pour l'intégrité de ces dispositifs 140 de type pitot puisque ceux-ci sont en contact avec un débit d'ergol de refroidissement à travers l'espace annulaire 119.

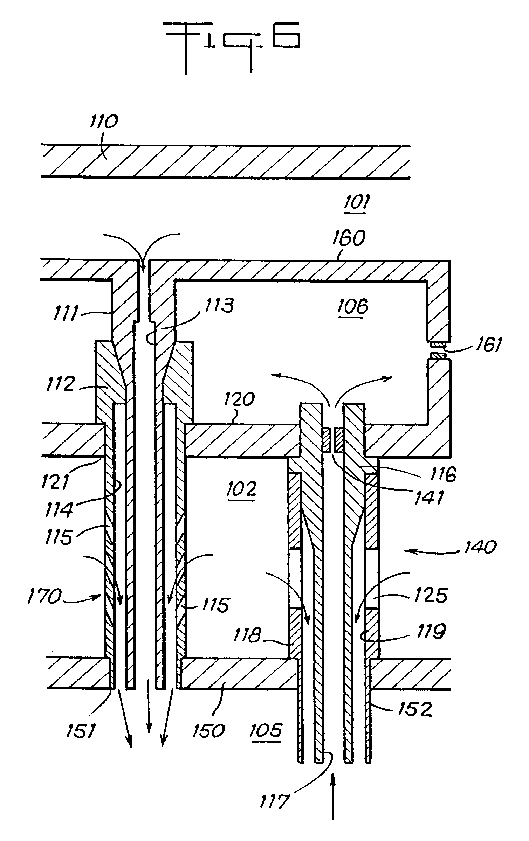

Dans le cas du mode de réalisation de la figure 6, les deux tubes 116, 118 pénètrent de la même longueur dans la chambre de combustion 105.

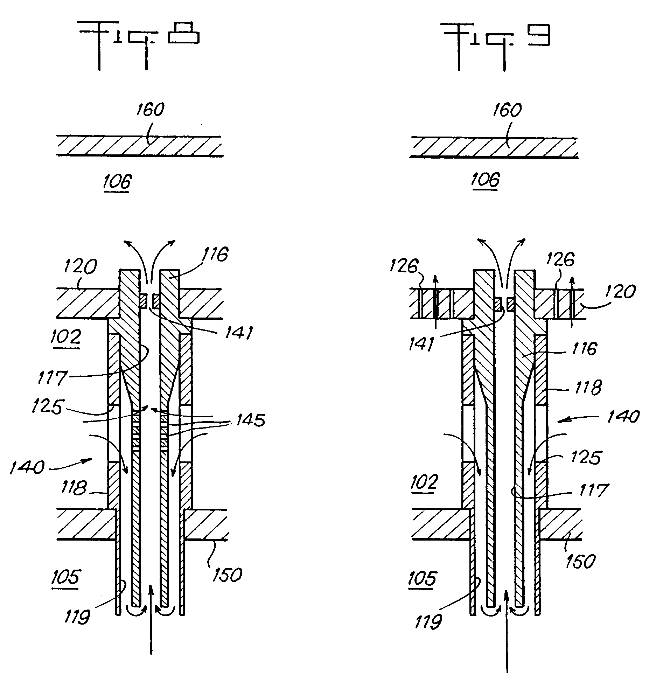

Toutefois, comme cela est représenté sur les figures 8 et 9, l'élément tubulaire externe 118 peut se pénétrer à l'intérieur de la chambre de combustion 105 sur une distance un peu plus grande que l'élément tubulaire interne 116. Cette disposition favorise le mélange d'une partie de l'ergol refroidisseur injecté dans la partie annulaire 119 avec le flux des gaz chauds prélevés à l'extrémité du canal central 117 du tube 116 et montant à travers l'organe de prélèvement.

Dans le mode de réalisation de la figure 5, seul le tube interne 116 constituant le tube de prélèvement proprement dit pénètre dans la chambre de combustion 105. Ceci permet d'éviter qu'une trop grande quantité d'ergol de refroidissement soit prélevée. Dans ce mode de réalisation, il se forme un film de l'ergol refroidisseur sur la partie externe du tube interne de prélèvement 116 qui pénètre dans la chambre de combustion 105, ce qui contribue à protéger ce tube interne 116.

Dans les modes de réalisation des figures 5, 6 et 8, 9, le tube intérieur 116 débouche, par son extrémité opposée à la chambre de combustion 105, dans une cavité 106 de prélèvement de gaz chauds. Le mélange gaz chauds-ergol traverse le tube intérieur 116 depuis la chambre de combustion 105 jusqu'à la cavité 106 de prélèvement de gaz chauds.

La figure 8 montre un mode particulier de réalisation d'un dispositif de prélèvement 140 dans lequel le tube intérieur 116 est percé de trous 145 situés au même niveau que les ouvertures 125 formées dans la paroi latérale du tube extérieur 118. Dans ce cas, l'ergol refroidisseur est ainsi injecté directement dans la veine centrale de l'ensemble d'injection 140. Les trous 145 de la figure 8 jouent ainsi le même rôle que les trous 145 de la figure 3 et ont pour but de permettre le refroidissement des gaz chauds d'une valeur prédéterminée par injection d'ergol froid.

La figure 9 montre un troisième mode de réalisation d'un dispositif de prélèvement 140 conforme à l'invention, selon lequel des orifices 126 sont pratiqués dans la paroi 120 séparant la cavité 102 d'injection d'ergol de la cavité 106 de prélèvement de gaz chauds, afin d'établir une communication entre ces deux cavités. Cette communication a là encore pour but de permettre de refroidir les gaz chauds d'une valeur prédéterminée par injection d'un ergol froid.

Dans les divers modes de réalisation des figures 1 et 3 à 11, les éléments semblables portent les mêmes numéros de référence, de sorte que les éléments déjà décrits en référence à la figure 1 ne seront pas décrits de nouveau.

Comme il est visible sur la figure 1 et les figures 3 à 9, on peut réaliser, pour chacun des modes de réalisation qui viennent d'être décrits, un ajutage 141 ou un col sonique incorporé dans le tube intérieur 116 du dispositif de prélèvement 140 afin de régler et calibrer de façon individuelle pour chaque dispositif 140 le débit des gaz prélevés. Il est toutefois possible d'ajouter un ajutage 161 ou un col sonique à la sortie de la cavité de prélèvement 106 afin de réaliser de façon globale un réglage et un calibrage quel que soit le nombre des dispositifs de prélèvement 140 (Fig 1 et 3 à 7).

Les organes de calibrage 141, 161 peuvent servir non seulement à régler le débit des gaz de combustion, mais aussi à découpler le fonctionnement de la chambre de combustion de celui des organes utilisant les gaz prélevés.

Une fonction caractéristique du dispositif selon l'invention, est constituée par le refroidissement des gaz chauds générés par la combustion des deux ergols et prélevés dans la chambre de combustion 105, grâce à un mélange avec l'un des deux ergols. Dans la mesure où les gaz brûlés dans une chambre de combustion sont en général réducteurs, il est préférable de mélanger les gaz prélevés avec l'ergol réducteur. Le rapport entre le débit de gaz chaud prélevé et le débit d'ergol mélangé permet de régler la température des gaz en sortie du dispositif selon l'invention. Au cas où le débit d'ergol introduit dans le canal central 117 par son extrémité située dans la chambre de combustion ne serait pas suffisant pour refroidir les gaz jusqu'à une température voulue, il est possible, de créer un mélange supplémentaire entre l'ergol réducteur et les gaz chauds. Ce mélange peut se faire soit au niveau de chaque tube interne 116 grâce à une série d'orifices 145 (figure 8), soit en mettant en communication la cavité 102 de l'ergol réducteur avec la cavité 106 des gaz chauds (fig 9).

Il est à remarquer que dans tous les cas envisagés, le film d'ergol réducteur permet d'abord de refroidir chaque tube interne 116, lui assurant ainsi une meilleure tenue mécanique.

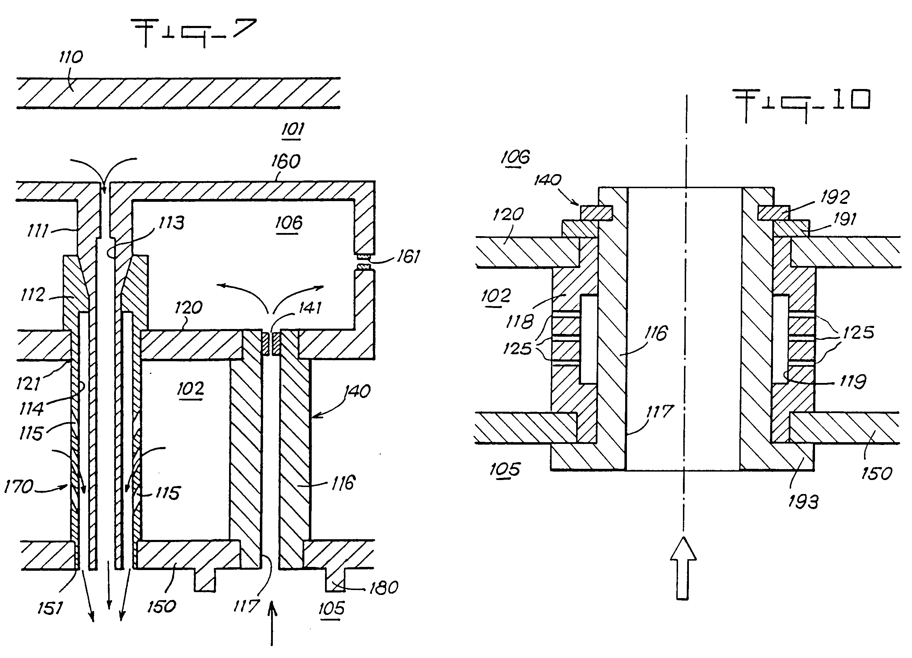

La figure 7 montre un mode de réalisation dans lequel un baffle 180 entoure l'entrée du tube de prélèvement 116. Ce baffle 180 est pris dans la masse de la plaque d'injection 150. La mise en oeuvre d'un baffle 180 autour d'un dispositif de prélèvement 140 a pour but de réduire les prélèvements de gaz partiellement brûlés en provenance des injecteurs voisins 170.

Sur la figure 7 on a montré un dispositif de prélèvement 140 à tube unique, mais il est naturellement également possible de réaliser des baffles 180 autour de dispositifs de prélèvement 140 à deux tubes coaxiaux tels que représentés sur les figures 4 à 6 ou 8, 9.

La figure 10 montre encore un autre mode de réalisation d'un dispositif de prélèvement 140 selon l'invention. Selon ce mode de réalisation, un tube métallique externe 118 constitue une entretoise entre la plaque d'injection 150 et la paroi 120 délimitant la chambre 102 contenant un ergol et la chambre 106 de réception des gaz prélevés par le dispositif de prélèvement 140. Le tube externe 118 formant entretoise est soudé d'une part sur la plaque d'injection 150 et d'autre part sur la paroi 120. Un tube interne 116 en matériau composite structural poreux constituant le tube de prélèvement proprement dit prend appui par une collerette 193 sur la face de la plaque 150 tournée vers la chambre de combustion 105, et se trouve maintenu en position par un anneau de fixation 192 portant sur une rondelle 191 elle-même plaquée contre la face de la cloison 120 située du côté de la chambre 106.

Des trous calibrés radiaux 125 sont ménagés dans le tube externe 118 et débouchent dans un espace annulaire 119 pour refroidir le tube interne 116 grâce à la porosité de ce tube.

Dans la présente description, on a décrit un dispositif de prélèvement 140, associé à un injecteur classique 170. Dans une tête d'injection comprenant plusieurs injecteurs 170, des dispositifs de prélèvement 140, peuvent être intercalés entre les injecteurs classiques 170, mais il n'est naturellement pas indispensable que le nombre de ceux-là soit égal à celui des injecteurs.

Les figures 12, 13 et 14 présentent trois exemples de disposition des organes de prélèvement 140 parmi les injecteurs 170. On remarquera que l'ensemble forme toujours un motif géométrique régulier. De plus, les injecteurs 170 voisins des organes de prélèvement sont de préférence munis d'orifices calibrés (non représentés) pour faciliter le prélèvement et assurer des conditions satisfaisantes de combustion.

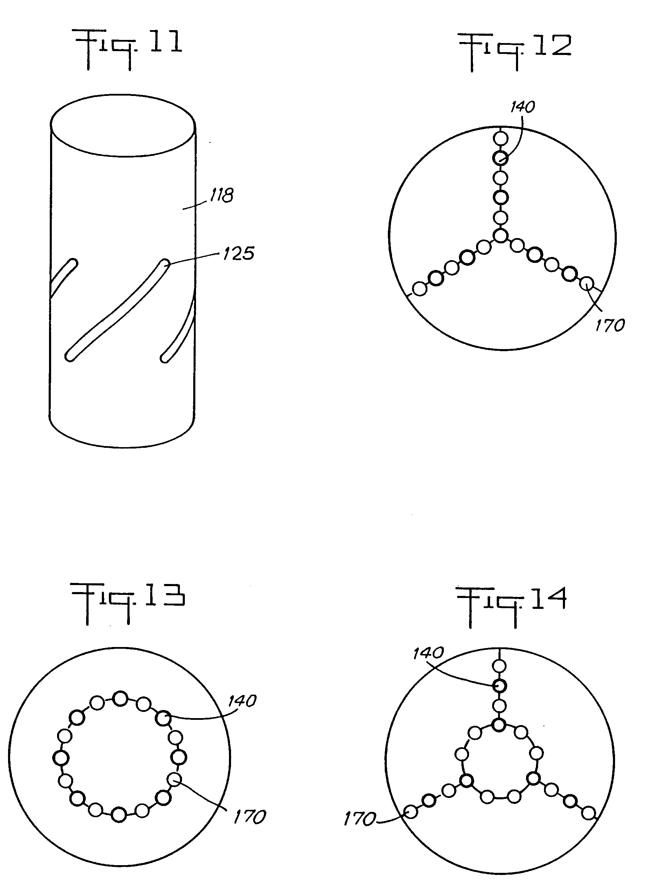

Comme représenté sur la figure 11, les orifices 125 de mise en communication de la chambre 102 contenant l'ergol réducteur avec l'espace annulaire 119 des dispositifs de prélèvement de gaz 140 peuvent présenter une forme particulière, par exemple, hélicoïdale afin de permettre un écoulement du film d'ergol dans l'espace annulaire 119 qui assure un refroidissement homogène sur la circonférence des tubes coaxiaux 116, 118. Il est par ailleurs souhaitable de donner à ces orifices 125 une forme et une dimension particulières afin de leur donner une fonction de calibrage permettant de régler la température des gaz prélevés. Les orifices 126 de la figure 9 peuvent de la même façon servir de calibrage et de réglage pour contribuer à régler la température des gaz prélevés.

Dans le cas du mode de réalisation de la figure 9, il est possible d'installer à l'intérieur de la chambre 106 recevant les gaz prélevés dans la chambre de combustion 105, un dispositif d'homogénéisation des gaz pour assurer un mélange convenable entre les gaz prélevés et le refroidisseur et obtenir ainsi une température homogène. Un tel dispositif comprend un obstacle à l'écoulement qui peut être constitué par des grilles, chicanes, bagues ou similaires et crée une turbulence dans l'écoulement. Ce dispositif mélangeur peut être placé dans la cavité de prélèvement 106 ou, éventuellement à la sortie de celle-ci en aval de l'organe de calibrage 161.

## Revendications

1. Dispositif de prélèvement de gaz chauds dans une chambre de combustion (105) dans laquelle débouchent plusieurs injecteurs (170) fournissant au moins deux ergols provenant de deux cavités différentes (101, 102) et un organe de prélèvement (140) destiné à acheminer des gaz prélevés dans la chambre de combustion (105) vers une troisième cavité (106), le dispositif comprenant un système de refroidissement à partir de l'un des ergols, caractérisé en ce que les injecteurs (170) sont montés dans une plaque d'injection (150) et comportent chacun au moins un canal d'amenée (113,114) pour un ergol, en ce qu'il comprend une pluralité d'organes de prélèvement (140) constitués chacun d'au moins un élément tubulaire (116) comportant au voisinage de son extrémité opposée à la chambre de combustion (105) un ajutage (141) de réglage individuel du débit des gaz prélevés, et en ce que ledit système de refroidissement à partir de l'un des ergols comprend des moyens de mise en contact direct dudit ergol avec au moins la face externe de la paroi latérale de chaque organe de prélèvement (140).

2. Dispositif selon la revendication 1 caractérisé en ce que le système de refroidissement de l'organe de prélèvement (140) comprend une mise en contact de l'ensemble de la face externe de la paroi latérale de l'élément tubulaire (116) avec l'un des ergols froids.

3. Dispositif selon la revendication 1, caractérisé en ce que le système de refroidissement de l'organe de prélèvement (140) comprend des moyens (125, 119) de mise en circulation de l'un des ergols sur une partie de la hauteur dudit organe de prélèvement (140).

4. Dispositif selon l'une quelconque des revendications 1 à 3, caractérisé en ce que la paroi latérale de l'élément tubulaire (116) constituant l'organe de prélèvement (140) est percée de trous calibrés radiaux (145) permettant de refroidir les gaz chauds circulant dans l'organe de prélèvement (140) d'une valeur prédéterminée par injection, dans le flux de gaz prélevés, d'un débit d'ergol froid avec lequel est en contact la face extérieure de la paroi latérale de l'élément tubulaire (116).

5. Dispositif selon la revendication 3, caractérisé en ce que ledit organe de prélèvement (140) comprend deux éléments tubulaires coaxiaux (116, 118) dont le plus interne (116) comporte au voisinage de son extrémité opposée à la chambre de combustion (105) ledit ajutage (141) de réglage individuel du débit des gaz prélevés et sert de tube de prélèvement proprement dit et le plus externe (118) constitue un tube de refroidissement.

6. Dispositif selon la revendication 5, caractérisé en ce que l'élément tubulaire externe (118) de l'organe de prélèvement est muni d'ouvertures (125) pour laisser s'écouler l'ergol refroidisseur dans un espace annulaire (119) défini par les deux éléments tubulaires coaxiaux (116, 118).

7. Dispositif selon la revendication 6, caractérisé en ce que l'espace annulaire (119) défini par les deux éléments tubulaires coaxiaux (116, 118) débouche dans la chambre de combustion (105).

8. Dispositif selon l'une quelconque des revendications 6 et 7, caractérisé en ce que l'élément tubulaire interne (116) est muni de trous (145) formés en regard des ouvertures (125) de l'élément tubulaire externe (118), destinés à augmenter le débit d'ergol refroidisseur mélangé aux gaz prélevés afin de diminuer la température des gaz prélevés.

9. Dispositif selon l'une quelconque des revendications 1 à 8, caractérisé en ce que l'extrémité de l'organe de prélèvement (140) pénètre d'une certaine longueur à l'intérieur de la chambre de combustion (105)

10. Dispositif selon la revendication 6 ou la revendication 7, caractérisé en ce que seul l'élément tubulaire interne (116) pénètre d'une certaine longueur à l'intérieur de la chambre de combustion (105) de manière à limiter le prélèvement d'une trop grande quantité de l'ergol de refroidissement.

11. Dispositif selon la revendication 6 ou la revendication 7, caractérisé en ce que l'élément tubulaire externe (118) pénètre à l'intérieur de la chambre de combustion (105) sur unedistance un peu plus grande que l'élément tubulaire interne (116) de façon à favoriser le mélange de l'ergol refroidisseur avec le flux de gaz chaud montant à travers l'organe de prélèvement (140).

12. Dispositif selon l'une quelconque des revendications 1 à 8, caractérisé en ce que l'élément tubulaire (116) constituant l'organe de prélèvement (140) débouche dans la chambre de combustion (105) en affleurant à la plaque d'injection (150).

13. Dispositif selon la revendication 5, caractérisé en ce que l'élément tubulaire externe (118) constituant un tube de refroidissement débouche dans la chambre de combustion (105) en affleurant à la plaque d'injection (150).

14. Dispositif selon l'une quelconque des revendications 1 à 3, caractérisé en ce que l'organe de prélèvement (140) est réalisé en un matériau résistant aux hautes températures tel qu'un composite thermostructural dont la porosité permet en outre le refroidissement tant de l'organe de prélèvement que des gaz chauds.

15. Dispositif selon la revendication 14, caractérisé en ce que l'organe de prélèvement (140) est réalisé en un matériau composite poreux et comprend une chambre annulaire (119) en communication par des trous calibrés radiaux (125) avec une source de fluide de refroidissement constituée par l'un des ergols froids.

16. Dispositif selon l'une quelconque des revendications 1 à 10, caractérisé en ce qu'il comprend en outre un baffle (180) qui entoure l'entrée de l'organe de prélèvement (140) du côté de la chambre de combustion (105) et est pris dans la masse de la plaque d'injection pour limiter le prélèvement de gaz incomplètement brûlés.

17. Tête d'injection pour chambre de combustion (105), comprenant des première et deuxième cavités (101, 102) contenant des premier et deuxième ergols, plusieurs injecteurs (170) comportant chacun au moins un canal d'amenée (113, 114) pour l'un des ergols, lesdits injecteurs (170) débouchant dans ladite chambre de combustion (105), caractérisée en ce qu'elle comprend en outre au moins un dispositif de prélèvement selon l'une quelconque des revendications 1 à 16, pour acheminer vers une troisième cavité (106) des gaz prélevés dans la chambre de combustion (105) et en ce que la cavité (106) vers laquelle sont amenés les gaz chauds prélevés est munie à sa sortie d'un élément (161) de réglage du débit des gaz, sous forme d'ajutage ou de col sonique.

18. Tête d'injection selon la revendication 17, caractérisée en ce que les organes de prélèvement (140) sont disposés parmi les injecteurs (170) selon des motifs géométriques réguliers.

19. Tête d'injection selon la revendication 17 ou la revendication 18, caractérisée en ce que des orifices (126) de passage de l'ergol refroidisseur sont ménagés dans la paroi (120) séparant la cavité (102) le contenant et la cavité (106) dans laquelle sont acheminés les gaz prélevés.

20. Tête d'injection selon l'une quelconque des revendications 17 à 19, caractérisée en ce que les injecteurs (170) placés à proximité d'un dispositif de prélèvement sont munis d'orifices calibrés pour faciliter le prélèvement et assurer des conditions satisfaisantes de combustion.

## Claims

1. Device for tapping off hot gases from a combustion chamber (105) into which a plurality of injectors (170) open, the injectors delivering at least two propellants coming from two different cavities (101, 102), and into which a tap-off means (140) opens to convey the gases tapped from the combustion chamber (105) into a third cavity (106), the device including a cooling system originating from one of the propellants, characterized in that the injectors (170) are mounted in an injection plate (150), each injector having at least an inlet channel (113, 114) for a propellant, in that it comprises a plurality of tap-off means (140), each tap-off means being formed by at least one tubular element (116) having, in the region of its end opposite the combustion chamber (105), a nozzle (141) for individual adjustment of the flow of the gases tapped off, and in that said cooling system originating from one of the propellants comprises means for directly putting said propellant into contact with at least the external face of the lateral wall of each tap-off means (140).

2. Device according to claim 1, characterized in that the cooling system of the tap-off means (140) involves placing the whole of the external face of the lateral wall of the tubular element (116) into contact with one of the cold propellants.

3. Device according to claim 1, characterized in that the cooling system of the tap-off means (140) includes means (125, 119) for putting into circulation one of the propellants over a part of the length of said tap-off means (140).

4. Device according to any one of claims 1 to 3, characterized in that the lateral wall of the tubular element (116) forming the tap-off means (140) is perforated with radial calibrated holes (145) to allow the hot gases circulating in the tap-off means (140) to be cooledby a predetermined amount by injection, into the flow of gases tapped off, of a flow of cold propellant with which the external face of the lateral wall of the tubular element (116) is in contact.

5. Device according to claim 3, characterized in that said tap-off means (140) includes two coaxial tubular elements (116, 118), the innermost one (116) of which having, in the region of its end opposite the combustion chamber (105), said nozzle (141) for individual adjustment of the tapped off gas flow and serving as the tap-off tube proper, and the outermost tube (118) constituting a cooling tube.

6. Device according to claim 5, characterized in that the external tubular element (118) of the tap-off means is provided with openings (125) to allow passage therethrough of cooling propellant into an annular space (119) defined by the two coaxial tubular elements (116, 118).

7. Device according to claim 6, characterized in that the annular space (119) defined by the two coaxial tubular elements (116, 118) gives into the combustion chamber (105)

8. Device according to any one of claims 6 and 7, characterized in that the internal tubular element (116) is provided with holes (145), formed opposite the openings (125) of the external tubular element (118), intended for increasing the flow of cooling propellant mixed with the tapped off gases in order to reduce the temperature of the gases tapped off.

9. Device according to any one of claims 1 to 8, characterized in that the end of the tap-off means (140) penetrates by a certain length inside the combustion chamber (105).

10. Device according to claim 6 or claim 7, characterized in that only the internal tubular element (116) penetrates by a certain length inside the combustion chamber (105), so as to limit the tapping off of too large a quantity of cooling propellant.

11. Device according to claim 6 or claim 7, characterized in that the external tubular element (118) penetrates inside the combustion chamber (105) over a distance slightly exceeding that of the internal tubular element (116), so as to enhance the mixture of cooling propellant with the flux of hot gases rising through the tap-off means (140).

12. Device according to any one of claims 1 to 8, characterized in that the internal tubular element (116) forming the tap-off means (140) gives into the combustion chamber (105), whilst being flush with the injection plate (150).

13. Device according to claim 5, characterized in that the external tubular element (118) constituting a cooling means gives into the combustion chamber (105), whilst being flush with the injection plate (150).

14. Device according to any one of claims 1 to 3, characterized in that the tap-off means (140) is made of a material that withstands high temperatures, such as a thermo-structural composite material the porosity of which permits a cooling both of the tap-off means and the hot gases.

15. Device according to claim 14, characterized in that the tap-off means (140) is made of a porous composite material and comprises an annular chamber (119) communicating via radial calibrated holes (125) with a source of cooling fluid constituted by one of the cold propellants.

16. Device according to any one of claims 1 to 10, characterized in that it further includes a baffle (180) that surrounds the inlet of the tap-off means (140) on the combustion chamber (105) side and is unitary with the injection plate, thus limiting the tapping off of incompletely burnt gases.

17. Injector head for a combustion chamber (105), comprising first and second cavities (101, 102) containing first and second propellants, a plurality of injectors (170) each having at least an inlet channel (113, 114) for one of the propellants, said injectors (170) giving into said combustion chamber (105), characterized in that it further includes at least one tap-off device according to any one of claims 1 to 16, to convey gases tapped off from the combustion chamber (105) to a third cavity, and in that the cavity (106) into which are brought the hot tapped off gases is fitted with a gas flow adjustment element (161) at its output, said element being in the form of a nozzle or a sonic jet.

18. Injector head according to claim 17, characterized in that the tap-off means (140) are arranged among the injectors (170) according to a regular geometrical pattern.

19. Injector head according to claim 17 or claim 18, characterized in that passage holes (126) for cooling propellant are provided in the wall (120) separating the cavity (102) containing said propellant from the cavity (106) into which are conveyed the gases tapped off.

20. Injector head according to any one of claims 17 to 19, characterized in that injectors (170) located in proximity to a tapping off device are fitted with calibrated holes to facilitate gas tap off and to ensure satisfactory combustion conditions.

## Patentansprüche

1. Vorrichtung zur Entnahme heisser Gase in einer Brennkammer (105), in die mehrere Düsen (170) münden, die wenigstens zwei Brennstoffe liefern, die von zwei verschiedenen Hohlräumen (101, 102) stammen und in welche Brennkammer ein Entnahmeelement (140) mündet, das dazu bestimmt ist, Gase, die in der Brennkammer (105) entnommen werden, zu einem dritten Hohlraum (106) zu leiten, wobei die Vorrichtung ein System zum Kühlen mittels eines der Brennstoffe aufweist, dadurch gekennzeichnet, dass die Düsen (170) in einer Düsenplatte (150) angeordnet sind und jeweils wenigstens einen Zuleitungskanal (113, 114) für einen Brennstoff aufweisen, dass mehrere Entnahmeelemente (140) vorhanden sind, die jeweils aus wenigstens einem Rohrelement (116) bestehen, das nahe seinem Ende, das der Brennkammer (105) entgegengesetzt ist, eine Düse (141) zur individuellen Regulierung der Durchsatzmenge entnommener Gase aufweist, und dass das System zum Kühlen mittels eines der Brennstoffe Einrichtungen aufweist, um den Brennstoff mit wenigstens der Aussenfläche der Seitenwand jedes Entnahmeelements (140) in direkten Kontakt zu bringen.

2. Vorrichtung nach Anspruch 1, dadurch gekennzeichnet, dass das Kühlsystem des Entnahmeelements (140) eine Einrichtung zum Kontaktieren der gesamten Aussenfläche der Seitenwand des Rohrelements (116) mit einem der kalten Brennstoffe aufweist.

3. Vorrichtung nach Anspruch 1, dadurch gekennzeichnet, dass das Kühlsystem des Entnahmeelements (140) Einrichtungen (125, 119) zum Umwälzen eines der Brennstoffe über einen Teil der Höhe des Entnahmeelements (140) aufweist.

4. Vorrichtung nach einem der Ansprüche 1 bis 3, dadurch gekennzeichnet, daß die Seitenwand des Rohrelements (116), das das Entnahmeelement (140) bildet, von kalibrierten radialen Öffnungen (145) durchsetzt ist, die es ermöglichen, die heißen Gase, die in dem Entnahmeelement (140) zirkulieren, um einen bestimmten Wert durch Einspritzen in den Strom der entnommenen Gase einer Menge kalten Brennstoffs zu kühlen, mit dem die Außenfläche der Seitenwand des Rohrelements (116) in Kontakt steht.

5. Vorrichtung nach Anspruch 3, dadurch gekennzeichnet, daß das Entnahmeelement (140) zwei koaxiale Rohrelemente (116, 118) aufweist, von denen das innere (116) nahe seinem Ende, das zur Brennkammer (105) entgegengesetzt ist, die Düse (141) zur individuellen Regulierung der Durchsatzmenge der entnommenen Gase aufweist und als eigentliches Entnahmeelement dient, und das äußere (118) ein Kühlrohr bildet.

6. Vorrichtung nach Anspruch 5, dadurch gekennzeichnet, daß das äußere Rohrelement (118) des Entnahmeelements mit Öffnungen (125) versehen ist, um den Kühl-Brennstoff in einen Ringraum (119) strömen zu lassen, der durch die beiden koaxialen Rohrelemente (116, 118) gebildet ist.

7. Vorrichtung nach Anspruch 6, dadurch gekennzeichnet, daß der Ringraum (119), der durch die beiden koaxialen Rohrelemente (116, 118) gebildet ist, in die Brennkammer (105) mündet.

8. Vorrichtung nach Anspruch 6 oder 7, dadurch gekennzeichnet, daß das innere Rohrelement (116) mit Öffnungen (145) versehen ist, die gegenüber den Öffnungen (125) des äußeren Rohrelements (118) gebildet sind und die dazu dienen, die Durchsatzmenge von Kühl-Brennstoff zu erhöhen, der mit den entnommenen Gasen gemischt ist, um die Temperatur der entnommenen Gase zu reduzieren.

9. Vorrichtung nach einem der Ansprüche 1 bis 8, dadurch gekennzeichnet, dass das Ende des Entnahmeelements (140) um eine bestimmte Länge in das Innere der Brennkammer (105) eindringt.

10. Vorrichtung nach Anspruch 6 oder 7, dadurch gekennzeichnet, dass das innere Rohrelement (116) um eine bestimmte Länge in das Innere der Brennkammer (105) derart eindringt, dass die Entnahme einer zu grossen Menge an Kühl-Brennstoff begrenzt wird.

11. Vorrichtung nach Anspruch 6 oder 7, dadurch gekennzeichnet, dass das äussere Rohrelement (118) in das Innere der Brennkammer (105) um eine Stecke eindringt, die etwas grösser als das innere Rohrelement (116) ist, um das Mischen des Kühl-Brennstoffs mit dem Strom heissen Gases zu erhöhen, der über das Entnahmeelement (140) aufsteigt.

12. Vorrichtung nach einem der Ansprüche 1 bis 8, dadurch gekennzeichnet, dass das Rohrelement (116), das das Entnahmeelement (140) bildet, in die Brennkammer (105) mündet, wobei es bündig mit der Düsenplatte (150) abschliesst.

13. Vorrichtung nach Anspruch 5, dadurch gekennzeichnet, dass das aüssere Rohrelement (118) ein Kühlrohr bildet, das in die Brennkammer (105) mündet, wobei es bündig mit der Düsenplatte (150) abschliesst.

14. Vorrichtung nach einem der Ansprüche 1 bis 3, dadurch gekennzeichnet, dass das Entnabmeelement (140) aus einem gegen hohe Temperaturen beständigen Material, wie einem wärmebeständigen Verbundwerkstoff, gebildet wird, deren Porosität ausserdem die Kühlung des Entnahmeelements ebenso wie der heissen Gase ermöglicht.

15. Vorrichtung nach Anspruch 14, dadurch gekennzeichnet, dass das Entnahmeelement (140) aus einem porösen Verbundwerkstoff besteht und eine Ringkammer (119) hat, die durch kalibrierte radiale Öffnungen (125) mit einer Quelle eines Kühl-Strömungsmittels in Verbindung steht, die von einem der kalten Brennstoffe gebildet ist.

16. Vorrichtung nach einem der Ansprüche 1 bis 10, dadurch gekennzeichnet, daß sie außerdem ein Abblendblech (180) aufweist, das den Eintritt des Entnahmeelements (140) auf der Seite der Brennkammer (105) umgibt und mit der Masse der Düsenplatte einstückig ausgebildet ist, um die Entnahme von unvollständig verbrannten Gasen zu begrenzen.

17. Düsenkopf für eine Brennkammer (105), bestehend aus einem ersten und einem zweiten Hohlraum (101, 102), die einen ersten und einen zweiten Brennstoff enthalten, mehreren Düsen (170), die wenigstens einen Zuleitungskanal (113, 114) für einen der Brennstoffe aufweisen, wobei die Düsen (170) in die Brennkammer (105) münden, dadurch gekennzeichnet, daß er außerdem wenigstens eine Entnahmevorrichtung nach einem der Ansprüche 1 bis 16 aufweist, um in der Brennkammer (105) entnommene Gase zu wenigstens einem dritten Hohlraum (106) zu leiten, und daß der Hohlraum (106), zu dem die entnommenen heißen Gase geleitet werden, an seinem Ausgang mit einem Element (161) zur Regulierung der Gasdurchsatzmenge in Form einer Düse oder eines Schalltrichters versehen ist.

18. Düsenkopf nach Anspruch 17, dadurch gekennzeichnet, daß die Entnahmeelemente (140) zwischen den Düsen (170) entsprechend regelmäßigen geometrischen Mustern angeordnet sind.

19. Düsenkopf nach Anspruch 17 oder 18, dadurch gekennzeichnet, daß Öffnungen (126) für den Durchgang des Kühl-Brennstoffs in der Wand (120) ausgebildet sind, die den Hohlraum (102), der ihn enthält, und den Hohlraum (106) trennt, in denen die entnommenen Gase geleitet werden.

20. Düsenkopf nach einem der Ansprüche 17 bis 19, dadurch gekennzeichnet, daß die Düsen (170), die nahe einer Entnahmevorrichtung angeordnet sind, mit kalibrierten Öffnungen versehen sind, um die Entnahme zu erleichtern und zufriedenstellende Brennbedingungen zu garantieren.
